# EUROPEAN PATENT APPLICATION

(11) **EP 4 831 130 A1**
(43) Date of publication of application: **28.10.2026**
(21) Application number: 24905266.3
(22) Date of filing: 09.04.2024
(51) Int. Cl.: C01G 28/02, C01G 49/00, C01G 49/02, C22B 30/00, C02F 1/52

(54) **PRODUCTION OF SCORODITE FROM SOLUTIONS CONTAINING ARSENIC AND SULFURIC ACID**

(30) Priority: 19.12.2023 CL 20233793
(71) Applicant: ECOMETALES LIMITED, AGENCIA EN CHILE, Providencia Seleccione (CL)
(72) Inventor: PEZOA CONTE, Ricardo Miguel, Champa Seleccione (CL); CORNEJO FIGUEROA, Guillermo Arturo, Litueche (CL); ACUÑA GOYCOLEA, Marcelo Gustavo, Las Condes Santiago (CL)
(74) Representative: Daub, Thomas
(86) International application number: PCT/CL2024/050032
(87) International publication number: WO 2025/129365

(57) **Abstract**

A process for obtaining scorodite without the use of neutralizers from solutions comprising arsenic and sulfuric acid and comprising the steps of: i. subjecting a first arsenical solution comprising arsenic in mixtures of arsenite ion and arsenate ion and sulfuric acid, to an oxidation process in order to oxidize the arsenite ion into arsenate ion, in order to obtain a second arsenical solution; ii. adding to the second arsenical solution a first solution comprising ferrous ion, to generate a third arsenical solution; iii. adding to the third arsenical solution a first portion of magnetite to adjust the molar ratio of ferric ion: arsenate ion between 0.3 and 1 to generate a first arsenical slurry; iv. adding to the first arsenical slurry a portion of a scorodite slurry, recirculated from stage (viii), as a nucleation base of scorodite particles, to obtain a first scorodite slurry that is within the range of 2 to 15% wt.; v. heating the first scorodite slurry to a temperature between 80 and 90°C; vi. maintaining the first scorodite slurry at a temperature between 80 and 90°C for a time between 5 and 48 h to obtain a second scorodite slurry; vii. sending the second scorodite slurry to a solid liquid separation stage to obtain a third scorodite slurry and a treated solution; viii. recirculating a first part of the third scorodite slurry to stage (iv); and ix. filtering a second part of the third scorodite slurry to obtain a third scorodite slurry.

## Description

### Field of the Invention

The invention relates to a process for the generation of scorodite (hydrated ferric arsenate) where the use of neutralizers for pH adjustment is not necessary for its generation, starting from solutions with a high concentration of arsenic, which may come from a plurality of mining waste treatment processes of different types, from which arsenic is obtained as one of the main impurities which require a stabilization method in the long term. As a result of this process, arsenic residues are obtained, consisting essentially of scorodite and an arsenic-depleted solution.

### State of the art

Application WO2020237361 (D1) discloses a process for producing substantially gypsum-free crystalline scorodite, comprising adding an iron oxyhydroxide (FeOOH) compound to a pentavalent state arsenic solution to cause the formation of said scorodite. In D1 by adding iron oxyhydroxide the iron source implicitly contains base, which serves as an acidity regulator generating a neutralization of the arsenic solution. D1 mentions that to produce iron oxyhydroxide adding a base such as magnesium oxide is required, which manifests an outstanding difference with the present patent application where the non-use of bases is made explicit. Furthermore, D1 does not mention that the addition of ferrous sulfate is required for the catalysis of the precipitation reaction as claimed in the present application.

The Invention Patent CL N° 50423 (D2) aims at the abatement in a hydrometallurgical treatment plant of wastes and liquid effluents with high content of pollutants, such as arsenic and others for the production of scorodite. D2 discloses the steps of oxidation, adjustment of the Fe(III)/As(V) molar ratio of at least 1.0 by adding a magnetite leaching solution and pH adjustment by adding neutralizer. D2, by making use of calcium-based neutralizers, co-precipitates gypsum in the arsenical residue. D2 makes no mention of the use of recirculation of scorodite seed for improvements in precipitation kinetics.

CL Patent No. 66875 (CL Application 202101684) D3 discloses a process for obtaining a mining or industrial residue, comprising scorodite with a high arsenic content exceeding 15% from highly acidic solutions, higher in acid concentration than 45 g/L, comprising copper, arsenic and, optionally, iron, antimony and/or bismuth. In its steps, D3 discloses that the process requires the stages of acidity adjustment by generating a first gypsum residue, two stages of As(III) oxidation, adjustment of the Fe(III)/As(V) ratio by addition of a solution containing ferric ion, recirculation of a portion of scorodite slurry, acidity adjustment and heating. D3 differs from the present application in that the present patent application does not require an acidity adjustment step, and adding solid magnetite for adjustment of the Fe(III)/As(V) molar ratio and not a ferric solution.

CA 2066905 (D4) discloses a process to reduce arsenic levels in a solution comprising sulfuric acid, water and arsenic acid, comprising the steps of reacting the solution with copper or a copper-containing compound in a sufficient amount and at a sufficient temperature to produce copper arsenate; adding an alkaline solution to precipitate copper arsenate; adding ferric ion compound to precipitate ferric arsenate. Document D4 does not interfere with the present patent application since it only discloses reducing arsenic levels in solutions containing them.

### Technical Problem

The problem of the art is that there does not exist today a process for the production of an arsenical residue comprising scorodite with an As content above 25%wt., in which the addition of a neutralizer is not required for the treatment of solutions with a sulfuric acid concentration between 10 and 80 g/L.

The advantages of the present invention lie in that an arsenical residue with an arsenic content above 25%wt. can be generated without requiring the use of neutralizers. Additionally, the process claimed in the present patent application allows to oxidize part of the arsenious ion and ferrous ion present in the solution. The remaining acid in the depleted arsenic solutions can be used as an oxidizing agent for other resources such as copper oxides.

Oxidation of arsenious acid and ferrous sulfate occurs in the presence of naturally dissolved oxygen in the arsenic solution by generating free radicals on the magnetite surface.

The reaction of precipitation of scorodite from magnetite occurs as follows: $0 , 5 {Fe}_{3} {O}_{4} + 2 {H}_{2} {SO}_{4} \to 0 , 5 {Fe}_{2} {\left({SO}_{4}\right)}_{3} + 0 , 5 {FeSO}_{4} + 2 {H}_{2} O$ Eq.1. ${H}_{3} {AsO}_{4} + 0 , 5 {Fe}_{2} {\left({SO}_{4}\right)}_{3} + 2 {H}_{2} O \to {FeAsO}_{4} ∗ 2 {H}_{2} O + 1 , 5 {H}_{2} {SO}_{4}$ Eq.2.

Consequently, the overall reaction is as follows: ${H}_{3} {AsO}_{4} + 0 , 5 {Fe}_{3} {O}_{4} + 0 , 5 {H}_{2} {SO}_{4} \to {FeAsO}_{4} ∗ 2 {H}_{2} O + 0 , 5 {FeSO}_{4}$ Eq.3.

As a result of the above, the overall reaction consumes sulfuric acid, so adding a base for neutralization is not necessary. The addition of base has complexities because in the case of the addition of sodium-based neutralizers, sodium sulfate is generated, a salt that generates difficulties in its removal, which affects the reuse of the solutions in contexts where water resources are scarce. In addition, the presence of sodium favors the formation of natrojarosite, which can exchange arsenate ions and generate unstable arsenical compounds. On the other hand, the use of calcium-based neutralizers generates gypsum, which has disadvantages due to the co-precipitation of gypsum with scorodite, with this increasing the amount of arsenic waste generated and increasing disposal costs.

The precipitation of scorodite by magnetite has other benefits associated with the control of ferric ion supersaturation. By having the iron source in the solid state, the magnetite slowly dissolves to generate ferrous sulfate and ferric sulfate, where the latter quickly reacts at the boundary layer between the magnetite and the liquid sinus to generate ferric arsenate. This ferric arsenate evolves into crystalline ferric arsenate, i.e. scorodite. In this way the concentration of ferric ion is kept low, and there is always a gradient between the concentration of arsenate ion and ferric ion that favors the formation of scorodite, as already documented in the literature. This saturation control represents important differences with respect to the addition of soluble ferric ion salts, which require a chain precipitator system to control the oversaturation of ferric ion and thus keep the gradient of arsenate ion and ferric ion relatively high.

The addition of iron oxyhydroxides generated from the dissolution of ferric ion sources such as magnetite and/or ferric sulfate salts require in the case of the former to leach the magnetite with sulfuric acid into ferrous sulfate and ferric sulfate, and secondly, to add a neutralizer based on iron oxyhydroxides, to add a neutralizer based on sodium and/or magnesium to generate an iron oxyhydroxide without gypsum formation due to the absence of calcium and solubilized salts of sodium and/or magnesium sulfate, which make it difficult to reuse the process water. The iron oxyhydroxides are easily soluble in high temperature environments and sulfuric acid concentrations above 10 g/L, which causes an immediate drop in the pH of the solution.

The precipitation reaction of scorodite from iron oxyhydroxides occurs as follows: $0 , 5 {Fe}_{3} {O}_{4} + 2 {H}_{2} {SO}_{4} \to 0 , 5 {Fe}_{2} {\left({SO}_{4}\right)}_{3} + 0 , 5 {FeSO}_{4} + 2 {H}_{2} O$ Eq 4. $0 , 5 {Fe}_{2} {\left({SO}_{4}\right)}_{3} + 3 NaOH \to FeOOH + 1 , 5 {Na}_{2} {SO}_{4} + {H}_{2} O$ Eq 5. $FeOOH + 1 , 5 {H}_{2} {SO}_{4} \to 0 , 5 {Fe}_{2} {\left({SO}_{4}\right)}_{3} + 2 {H}_{2} O$ Eq.6. ${H}_{3} {AsO}_{4} + 0 , 5 {Fe}_{2} {\left({SO}_{4}\right)}_{3} + 2 {H}_{2} O \to {FeAsO}_{4} ∗ 2 {H}_{2} O + 1 , 5 {H}_{2} {SO}_{4}$ Eq.7.

Consequently, the overall reaction is as follows: $\begin{matrix}{H}_{3} {AsO}_{4} + 0 , 5 {Fe}_{3} {O}_{4} + 2 {H}_{2} {SO}_{4} + 3 NaOH \\ \to {FeAsO}_{4} ∗ 2 {H}_{2} O + 0 , 5 {FeSO}_{4} + 1 , 5 {Na}_{2} {SO}_{4} + 3 {H}_{2} O\end{matrix}$ Eq.8.

From the foregoing it becomes evident that the overall relationships for producing individualized scorodite in Equations Eq. 3 and Eq. 8 differ in the consumption of neutralizer that Equation Eq. 8 performs, in contrast to Equation Eq. 3 which does not require addition of neutralizer.

In summary, the novel and inventive aspects of the present application lie in that:
A. Precipitation of scorodite at high concentrations of sulfuric acid, higher than 35 g/L. This procedure allows obtaining a stabilized arsenical residue with As content higher than 25% wt. and essentially without gypsum formation.
B. Precipitation of scorodite without the use of neutralizer for sulfuric acid concentration adjustment, within the sulfuric acid concentration range between 35 and 80 g/L.
C. Oxidation of arsenite ion through the course of precipitation of arsenic in the form of scorodite with magnetite, which reduces the requirements of an oxidizing agent necessary for the oxidation of arsenite ion to arsenate ion. Arsenite ion oxidation yields vary between 20 and 30% wt..
D. Use of ferrous ion as a catalyst for the scorodite precipitation reaction, allowing the precipitation system to operate at Fe(III)/As(V) molar ratios below 1.0.

### Description of Figures

**Figure 1****.** It shows the kinetic effect of varying the solids percentage on the precipitation of arsenic(V) in the form of scorodite, with an arsenic solution with a concentration of 10 g/L, a sulfuric acid concentration of 70 g/L and a ferrous ion concentration of 20 g/L.
**Figure 2****.** It shows the effect of sulfuric acid concentration between 5 and 25 g/L and ferrous ion concentration on the kinetics of scorodite precipitation in sulfuric acid plant effluent - molar ratio Fe(III)_{Mag}/As(V) = 1.0. Graphs at equal sulfuric acid concentration 5 and 25 g/L varying ferrous ion concentration.
**Figure 3****.** It shows the effect of sulfuric acid concentration between 40 and 70 g/L and ferrous ion concentration on the kinetics of scorodite precipitation in sulfuric acid plant effluent - molar ratio Fe(III)_{Mag}/As(V) = 1.0. Graphs at equal sulfuric acid concentration varying ferrous ion concentration.
**Figure 4****.** It shows the effect of ferrous ion concentration 0.5, 2 and 5 g/L on scorodite precipitation kinetics in sulfuric acid plant effluent - molar ratio Fe(III)_{Mag}/As(V) = 1.0. Graphs at equal ferrous ion concentration varying H2SO4 concentration 5, 25, 40 and 70 g/L.
**Figure 5****.** It shows the effect of ferrous ion concentration on the concentration of residual sulfuric acid in EPAS solution (sulfuric acid plant effluent) - molar ratio Fe(III)_{Mag}/As(V) = 1.0.
**Figure 6****.** It shows the effect of sulfuric acid concentration between 5 and 25 g/L and ferrous ion concentration on As concentration in TCLP (Toxicity Characteristic Leaching Procedure) test of arsenic residue (ReAs) - molar ratio Fe(III)_{Mag}/As(V) = 1.0.
**Figure 7****.** It shows the effect of sulfuric acid concentration between 40 and 70 g/L and ferrous ion concentration on As concentration in TCLP (Toxicity Characteristic Leaching Procedure) test of arsenic residue (ReAs) - molar ratio Fe(III)_{Mag}/As(V) = 1.0.
**Figure 8****.** It shows the effect of sulfuric acid concentration between 5 and 25 g/L and ferrous ion concentration on the As content in the arsenic residue ReAs - molar ratio Fe(III)_{Mag}/As(V) = 1.0.
**Figure 9****.** It shows the effect of sulfuric acid concentration between 40 and 70 g/L and ferrous ion concentration on the As content in the arsenical residue ReAs- molar ratio Fe(III)_{Mag}/As(V) = 1.0.
**Figure 10****.** It shows the effect of sulfuric acid concentration between 5 and 25 g/L and ferrous ion concentration on the Fe content in the arsenical residue ReAs- molar ratio Fe(III)_{Mag}/As(V) = 1.0.
**Figure 11****.** It shows the effect of sulfuric acid concentration between 40 and 70 g/L and ferrous ion concentration on the Fe content in the arsenical residue ReAs- molar ratio Fe(III)_{Mag}/As(V) = 1.0.
**Figure 12****.** It shows the effect of sulfuric acid and ferrous ion concentration at elevated ferrous ion concentrations in the range between 5 and 20 g/L on the precipitation kinetics of scorodite in EPAS solution - molar ratio Fe(III)_{Mag}/As(V) = 1.0.
**Figure 13****.** It shows the effect of high sulfuric acid concentration and high ferrous ion concentration on the As and Fe content of the arsenical residue ReAs - molar ratio Fe(III)_{Mag}/As(V) = 1.0.
**Figure 14****.** It shows the effect of sulfuric acid concentration between pH 2 (0 g/L) and 10 g/L on As concentration in solution of slaked sulfuric acid plant effluent - ferrous concentration 5 g/L and Fe(III)_{Mag}/As(V) molar ratio = 0.5.
**Figure 15****.** It shows the effect of lowering Fe(III)_{Mag}/As(V) molar ratio and ferrous ion concentration on As concentration in treated EPAS solution - sulfuric acid concentration 5.0 g/L.
**Figure 16****.** It shows the effect of lowering the Fe(III)_{Mag}/As(V) molar ratio and ferrous ion concentration on the As(III) concentration in the treated EPAS solution - sulfuric acid concentration 5.0 g/L.
**Figure 17****.** It shows the effect of lowering the Fe(III)_{Mag}/As(V) molar ratio and ferrous ion concentration on the Fe concentration in the treated EPAS solution - sulfuric acid concentration 5.0 g/L.
**Figure 18****.** It shows the effect of lowering the Fe(III)_{Mag}/As(V) molar ratio and ferrous ion concentration on the Fe(II) concentration in the treated EPAS solution - sulfuric acid concentration 5.0 g/L.
**Figure 19****.** It shows the effect of lowering the Fe(III)_{Mag}/As(V) molar ratio and ferrous ion concentration on the As and Fe content of the arsenical residue ReAs - sulfuric acid concentration 5.0 g/L.
**Figure 20****.** It shows the effect of lowering the Fe(III)_{Mag}/As(V) molar ratio from 0.5 to 0.3 on the concentration of As and As(III) in the treated EPAS solution - ferrous concentration 5.0 g/L and sulfuric acid concentration 5.0 g/L.
**Figure 21****.** It shows the effect of lowering the Fe(III)_{Mag}/As(V) molar ratio from 0.5 to 0.3 on the concentration of Fe and Fe(II) in the treated EPAS solution - ferrous concentration 5.0 g/L and sulfuric acid concentration 5 g/L.
**Figure 22****.** It shows the effect of lowering the Fe(III)_{Mag}/As(V) molar ratio from 0.5 to 0.3 on the concentration of As and Cd released in TCLP (Toxicity Characteristic leaching procedure) test of scorodite residues - ferrous concentration 5.0 g/L and sulfuric acid concentration 5 g/L.
**Figure 23****.** It shows the effect of lowering Fe(III)_{Mag}/As(V) molar ratio from 0.5 to 0.3 on As and Fe concentration of scorodite residues - ferrous concentration 5.0 g/L and sulfuric acid concentration 5 g/L.
**Figure 24****.** It shows the effect of lowering the initial As(III) concentration on the As and As(III) concentration in the treated EPAS solution - Fe(III)_{Mag}/As(V) molar ratio 0.5 - sulfuric acid concentration 5.0 g/L - ferrous ion 5 g/L.
**Figure 25****.** It shows the effect of increasing the initial As(III) concentration on the As and As(III) concentration in the EPAS treated solution - molar ratio Fe(III)_{Mag}/As(V) 1.0 - sulfuric acid concentration 5.0 g/L - ferrous ion 5 g/L.
**Figure 26****.** It shows the effect of increasing the initial As(III) concentration on the concentration of Fe and Fe(II) in the EPAS treated solution - molar ratio Fe(III)_{Mag}/As(V) 0.5 - sulfuric acid concentration 5.0 g/L - ferrous ion 5 g/L.
**Figure 27****.** It shows the effect of lowering the initial As(III) concentration on the concentration of Fe and Fe(II) in the EPAS treated solution - molar ratio Fe(III)_{Mag}/As(V) 1.0 - sulfuric acid concentration 5.0 g/L - ferrous ion 5 g/L.
**Figure 28****.** It shows the effect of lowering the initial Fe(II) concentration on the concentration of As and As(III) - molar ratio Fe(III)_{Mag}/As(V) 1.0 - sulfuric acid concentration 25-75 g/L - ferrous ion 0.5 g/L.
**Figure 29****.** It shows the effect of lowering the initial Fe(II) concentration on As and As(III) concentration - molar ratio Fe(III)_{Mag}/As(V) 1.0 - sulfuric acid concentration 5 g/L - ferrous ion 1.0-2.0 g/L.
**Figure 30****.** It shows the effect of initial Fe(II) concentration in the range 3-4 g/L on As and As(III) concentration - sulfuric acid concentration 5.0 - Fe(III)_{Mag}/As(V) ratio 0.50 mol/mol (equivalent to Fe(III)_{Mag}/As(V) 0.50 mol/mol).
**Figure 31****.** It shows arsenic concentration in scorodite generation tests adding only magnetite and only ferrous sulfate as iron sources.
**Figure 32****.** It shows a diffractogram of ReAs arsenic residues generated in 24 h of precipitation with Fe(III)_{Mag}/As(V) molar ratio 1.0 and ferrous ion concentration 5 g/L and sulfuric acid concentration of 5 g/L.
**Figure 33****.** It shows a scanning electron microscopy image of arsenical residues ReAs generated in 24 h precipitation with Fe(III)_{Mag}/As(V) molar ratio 1.0 and ferrous ion concentration 5 g/L and sulfuric acid concentration of 5 g/L.
**Figure 34****.** It shows the particle size distribution of arsenical residues ReAs generated in 48 h of precipitation with Fe(III)_{Mag}/As(V) molar ratio 0.5 and ferrous ion concentration 4 g/L and sulfuric acid concentration of 5 g/L.
**Figure 35****.** It shows a scanning electron microscopy image of magnetite used in the scorodite precipitation tests.

### Definition of the invention

In the field of stabilization of hazardous elements, one of the routes defined for the generation of stable arsenical wastes is related to the optimization of the generation of concentrated scorodite, on which the applicant of the present patent application has been working.

One of the ways proposed to carry out these optimizations is to use magnetite as a direct input for the precipitation of scorodite using solutions from the EcoMetales Industrial Plant, in order to consume the sulfuric acid present in the PLS ("pregnant leach solution"), and at the same time reduce the consumption of limestone when adjusting the acidity of the process. A more efficient consumption of sulfuric acid helps in decreasing gypsum generation, and therefore decreasing the mass of arsenic residue produced while maintaining and even increasing the arsenic precipitation yield in the abatement process. As a result of the lessons learned in the design of the arsenic abatement process for the PLS processed by EcoMetales, the alternative of evaluating this technology for the abatement of arsenic from sulfuric acid plant effluents generated in smelting and/or roasting processes has been proposed.

Specifically, the present application discloses a procedure for obtaining scorodite without the use of neutralizers from solutions comprising arsenic and sulfuric acid, which comprises the following stages:
i. subjecting a first arsenical solution comprising arsenic in mixtures of arsenite ion and arsenate ion and sulfuric acid, to an oxidation process in order to oxidize the arsenite ion into arsenate ion, to obtain a second arsenical solution;
ii. adding to the second arsenical solution a first solution containing ferrous ion, to generate a third arsenical solution;
iii. adding to the third arsenical solution a first portion of magnetite to adjust the molar ratio of ferric ion and arsenate ion, to generate a first arsenical slurry;
iv. adding to the first arsenical slurry a portion of a scorodite slurry, recirculated from stage (viii), as a nucleation base of scorodite particles, to obtain a first scorodite slurry;
v. heating the first scorodite slurry to a temperature between 80 and 90°C;
vi. keeping the first scorodite slurry at a temperature between 80 and 90°C for a time between 5 and 48 h with constant agitation to obtain a second scorodite slurry;
vii. sending the second scorodite slurry to a solid-liquid separation stage to obtain a third scorodite slurry and a treated solution;
viii. recirculating a first part of the third scorodite slurry to stage (iv); and
ix. filtering a second part of the third scorodite slurry to obtain a scorodite cake that is sent to final disposal.

In one preferred option the first arsenical solution has an arsenic concentration ranging between 1 to 15 g/L.

In another preferred option the first arsenical solution has a concentration of sulfuric acid ranging from 5 to 80 g/L.

In another preferred option the oxidation process of step (i) consists of the addition of one of among hydrogen peroxide or sodium chlorite, or a photooxidation process.

In another preferential option the first solution of stage (ii) comprises ferrous sulfate.

In another preferential option in stage (ii) the concentration of ferrous ion is adjusted between 0.5 and 25 g/L.

In another preferential option magnetite is added such that the molar ratio of ferric ion: arsenate ion in step (iii) is adjusted between 0.3 and 1.

In another preferred option in the portion of magnetite that is added in step (iii) 80% of the particles have a particle size of less than 75 microns.

In another preferred option the portion of scorodite slurry that is added in step (iv) is added so that the solids content of the first scorodite slurry is within the range of 2 to 15%wt..

In another preferred option the temperature of step (v) is 85°C.

### Application examples

The following examples are to be considered as embodiments of the present invention, and in no case as limitations thereof, since the different adaptations that can be made thereof will be covered within the object claimed by this invention.

### Example 1

### Variation of the percentage of solids

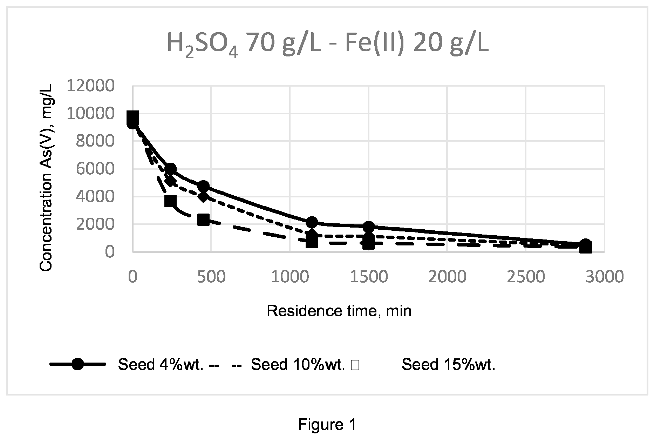

A 3800 g arsenical solution was placed in a 5000 mL reactor. The concentration of sulfuric acid in the arsenical solution was 70 g/L. Magnetite with a purity of 96% was added to the reactor such that the Fe(III)_{Mag}/As(V) ratio (expressed as moles of ferric ion in magnetite) was equal to 1 and was maintained with constant mechanical stirring at 600 RPM and at a temperature of 85°C with constant reflux by use of a condenser for 48 h. A defined amount of seed solids was added as scorodite to adjust the percentage of test solids to between 4-15%. At different times, slurry samples were taken for analysis of the concentration of As, As(III), Fe, Fe(II) and H₂SO₄ in the liquid phase, and of the solid at the end of the test, the results of which are shown in Figure 1.

The results show that there is an evident improvement by adding a higher amount of seed solids as scorodite, allowing to improve the arsenic(V) precipitation kinetics, with the best results being obtained using a percentage of recirculated scorodite solids of 15%wt..

### Example 2

### Precipitation of scorodite from sulfuric acid plant effluent solutions (EPAS)

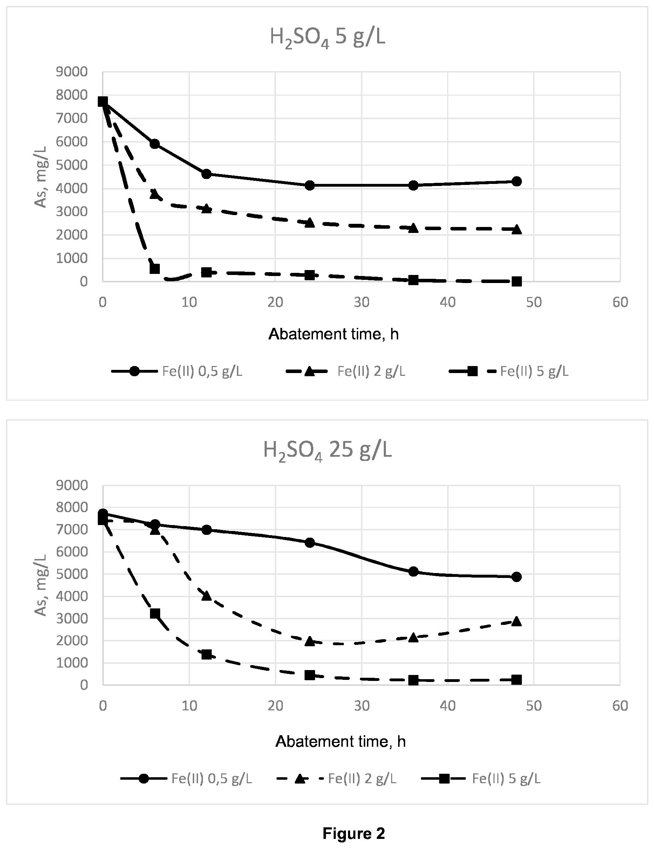

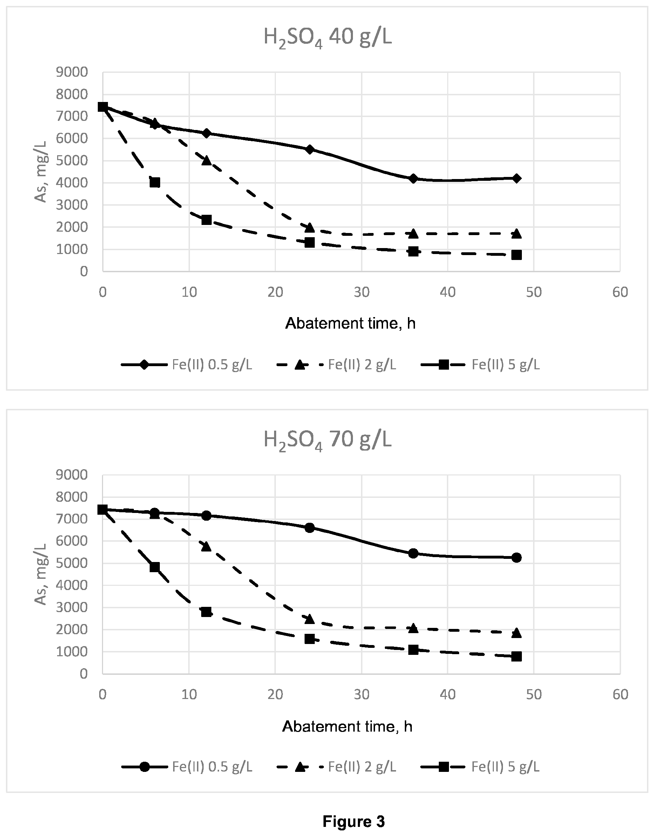

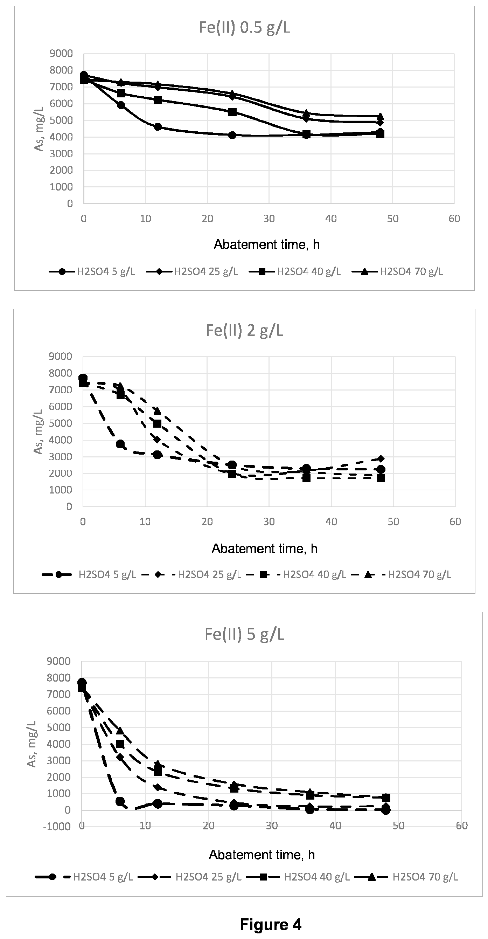

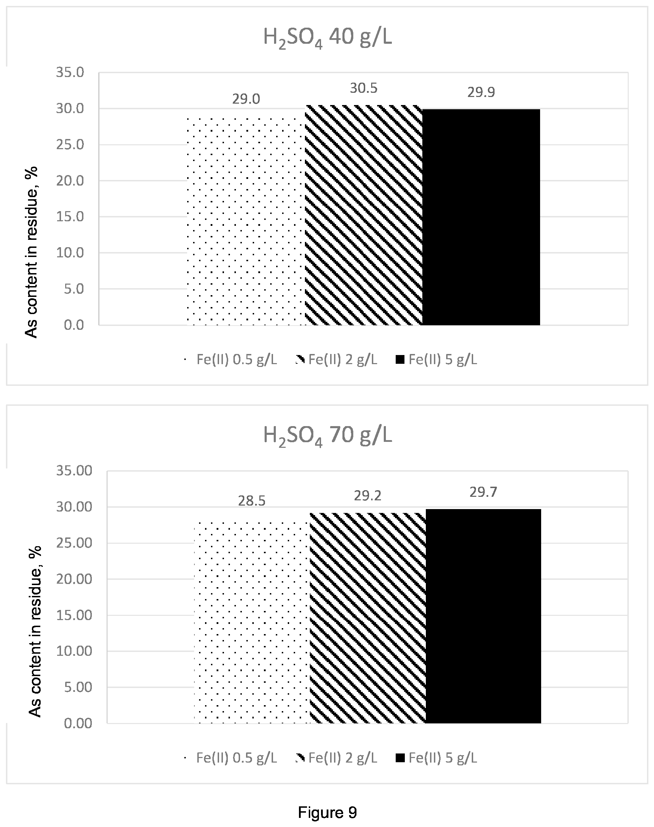

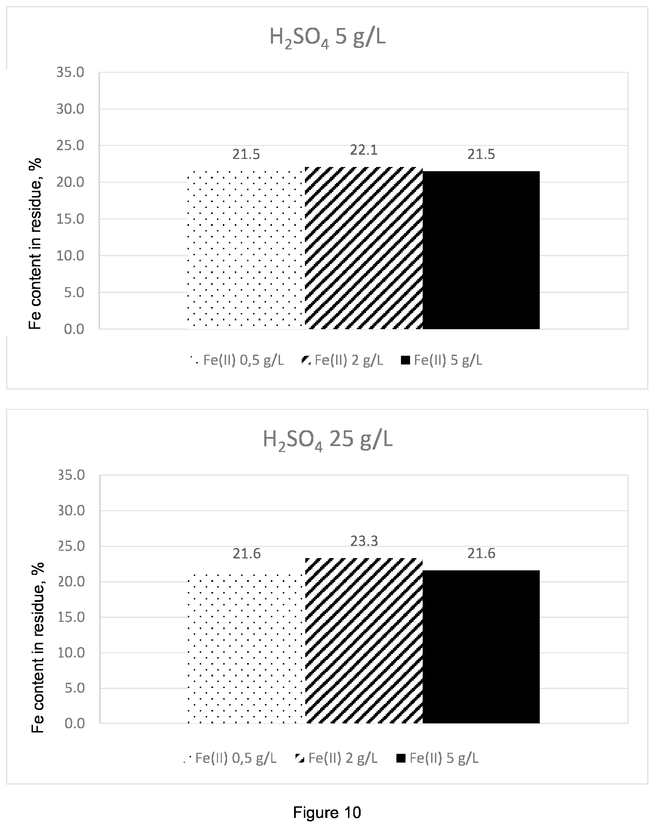

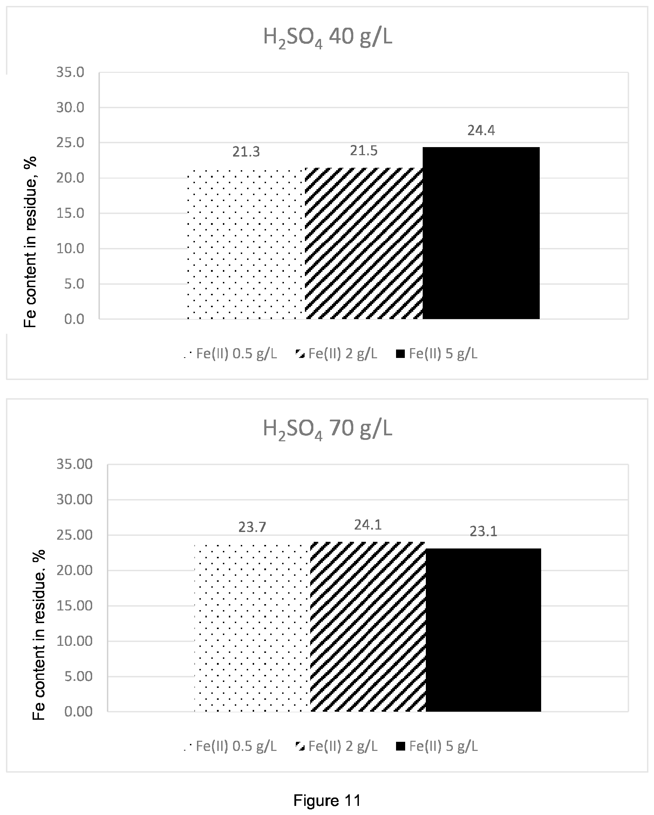

3800 g of an arsenical solution was placed in a 5000 mL reactor. The concentration of sulfuric acid in the arsenical solution ranged from 0 g/L (pH 2) to 5 g/L. The arsenical solution had a concentration ranging from 5 to 12 g/L of As. The As(III) was oxidized with hydrogen peroxide so that 100-300 mg/L of As(III) remained in the solution. In application examples where the As(III) concentration was higher than this range, arsenic trioxide p.a. was added to increase the starting concentration. Magnetite with a purity of 96% was added to the reactor such that the molar ratio (expressed as RM in the figures) Fe(III)_{Mag}/As(V) (expressed as moles of ferric ion in magnetite) varied between 0.3 and 1.2. The molar ratio was also expressed as Fe(III)_{Mag}/As(V), a value that is multiplied by 1.5 times the Fe(III)_{Mag}/As(V) molar ratio value because magnetite as the mineral used in the experiments contains two moles of ferrous ion for every two moles of ferric ion (chemical formula magnetite FeOFe2O3). The ferrous ion concentration was varied between 0.5 and 20 g/L by supplying ferrous sulfate heptahydrate for concentration adjustment. The percentage of initial scorodite seed solids was 15%wt., supplied as preprecipitated magnetite. The slurry was maintained with constant mechanical agitation at 600 RPM and at a temperature of 85°C with constant reflux using a condenser for 24 to 72 h. At different times, slurry samples were taken for analysis of the concentration of As, As(III), Fe, Fe(II) and H2SO4 in the liquid phase, and of the solid at the end of the test, the results of which are shown in Figures 2 to 35.

### Effect of H2SO4 concentration and ferrous ion concentration.

Figures 2, 3 and 4 show the evolution of arsenic concentration in the course of scorodite precipitation using different sulfuric acid and ferrous ion concentrations with a Fe(III)_{Mag}/As(V) magnetite molar ratio of 1.0. The results confirm that as the acidity increases the kinetics of arsenic precipitation, measured in particular on the As concentration at 12 h of precipitation, slows down. For the case of a sulfuric acid concentration of 100 g/L over the course of 48 h a very slow abatement kinetics is observed. The results show that the ferrous ion concentration has a beneficial effect in terms of arsenic abatement kinetics, since after 12 h of precipitation for all tests between 5 and 40 g/L H2SO4, lower As concentrations are observed when using a ferrous ion concentration of 5 g/L compared to the concentrations of 0.5 and 2 g/L.

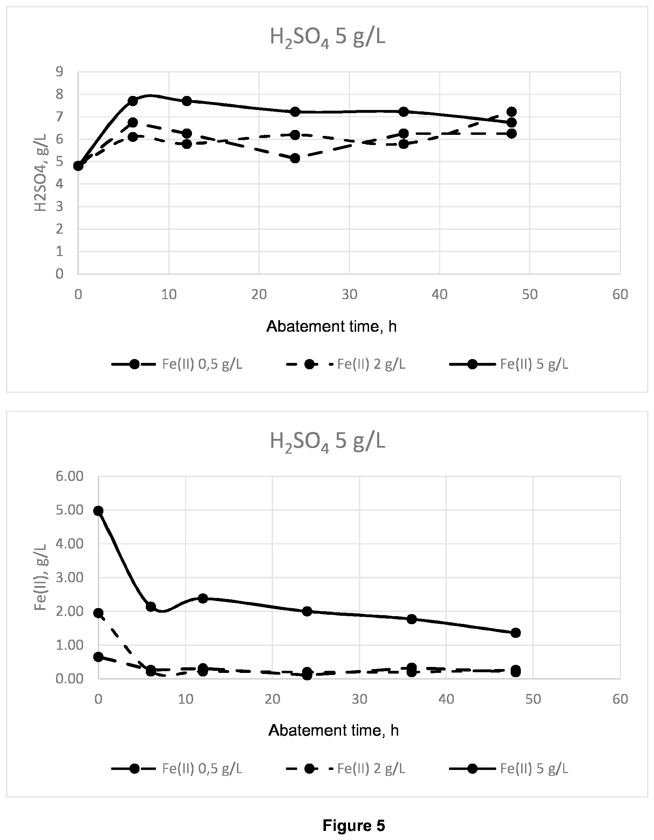

Figure 5 shows the evolution of sulfuric acid and ferrous ion concentration in the course of scorodite precipitation, at the initial concentration of 5g/L sulfuric acid and an initial ferrous ion concentration between 0.5 and 5 g/L with a Fe(III)_{Mag}/As(V) magnetite molar ratio of 1.0. The results show that there is little variation in sulfuric acid concentration (except for some analytical differences), indicating that there is a balance between acid consumption attributable to magnetite leaching and/or ferrous sulfate oxidation with acid generation produced by As(V) abatement in the form of scorodite.

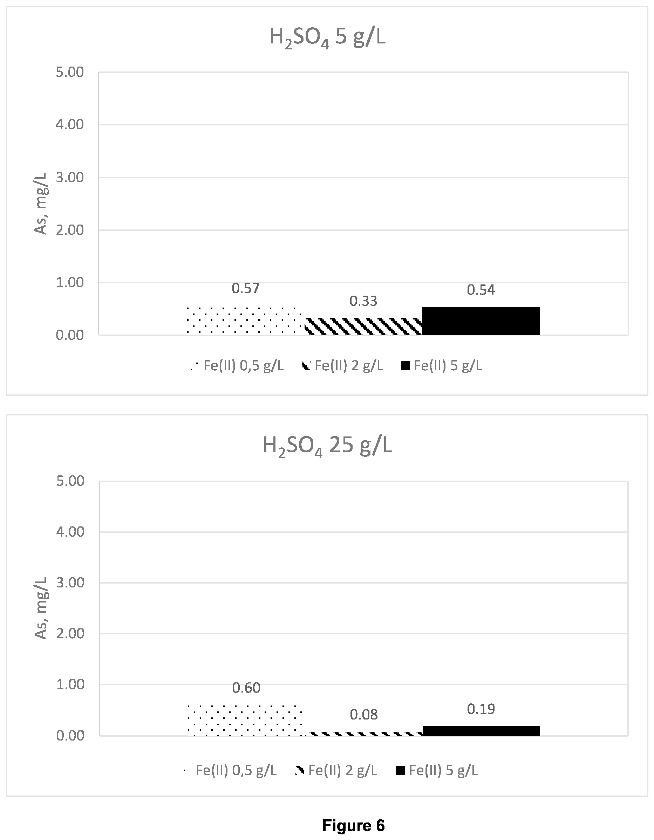

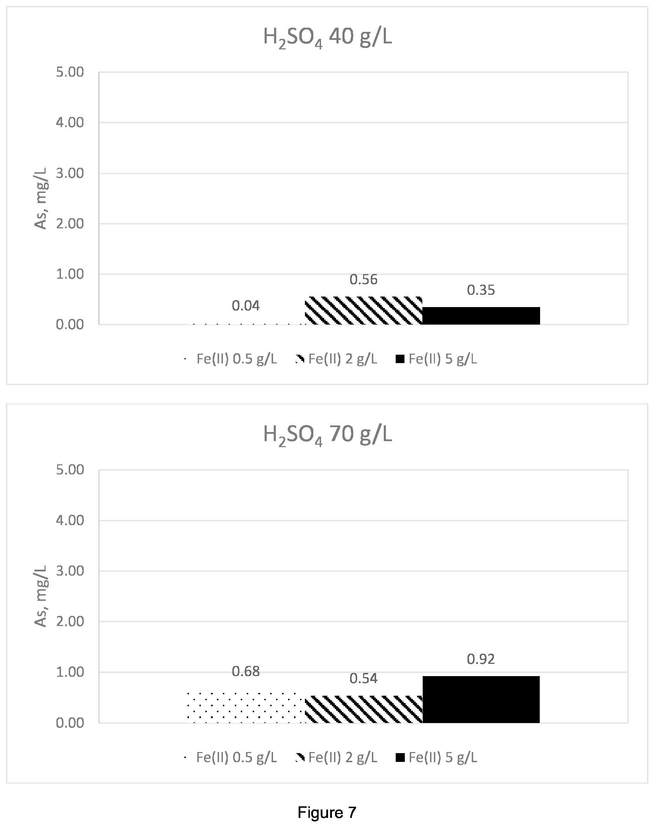

Figure 6 and 7 show the As concentration released in TCLP test for arsenic abatement tests with Fe(III)_{Mag}/As(V) = 1.0 molar ratio at different sulfuric acid concentration and in the presence and absence of ferrous ion. The results show that for all solids generated the As released in TCLP test is below 1 mg/L, indicating that the residues are stable.

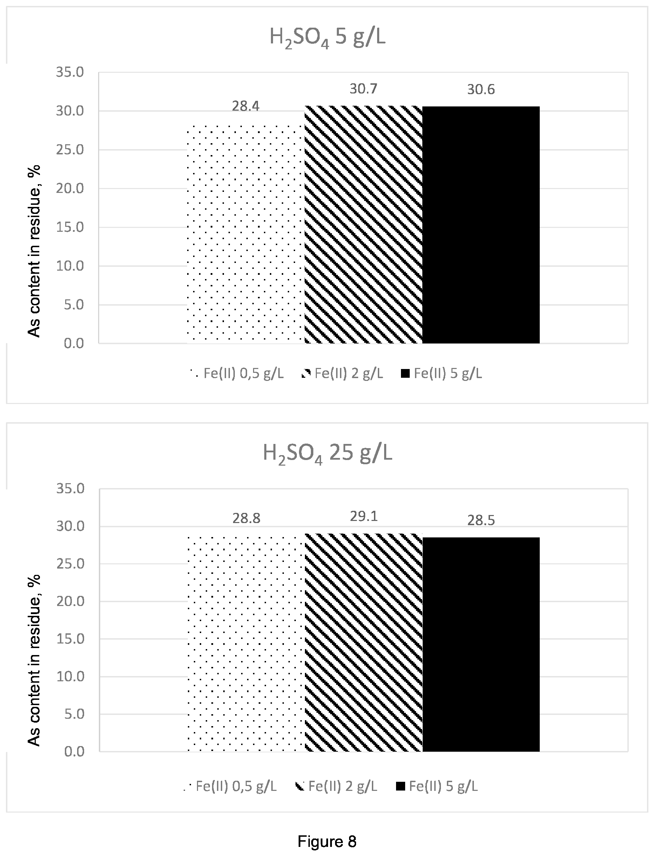

Figure 8, 9, 10 and 11 show the effect of elevated sulfuric acid concentration and ferrous ion concentration on the As and Fe content of the arsenical residue (ReAs) - molar ratio Fe(III)_{Mag}/As(V) = 1.0. The results show that the As grade of the arsenical residue (ReAs) varies around 26-29%, while the Fe grade varies between 21-24%. Although an improvement is observed in terms of reduction of the Fe content in the arsenical residue, which is associated with a lower magnetite content in the sample, the results indicate that it is not possible to obtain a complete conversion of magnetite in the presence of high concentrations of ferrous ion. As a consequence, using high concentrations of ferrous ion accelerates the kinetics, but part of the magnetite may not react, which would result as an impurity, reducing the As grade. On the other hand, lower ferrous ion concentrations generate slower precipitation kinetics, but favor a complete conversion of magnetite, which results in an arsenic residue more enriched in arsenic.

### Effect of increasing ferrous ion concentration to 20 g/L

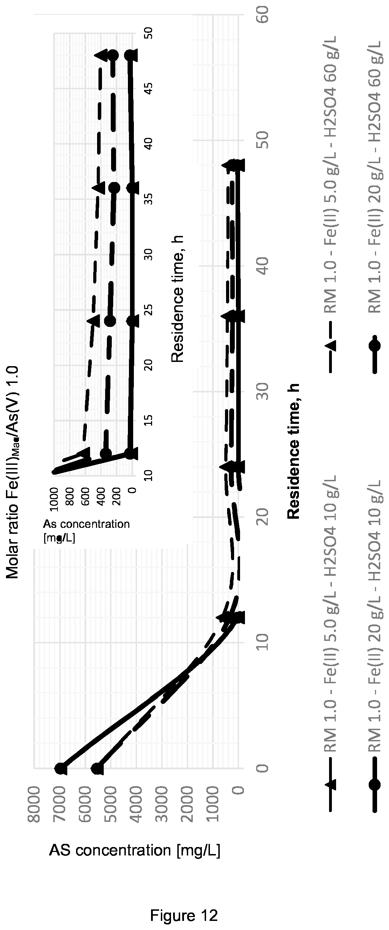

Figure 12 shows the effect of sulfuric acid and ferrous ion concentration at elevated ferrous ion concentrations in the range between 5 and 20 g/L. Increasing the ferrous ion concentration to 20 g/L shows a positive effect on improving the abatement kinetics, however, this effect is more limited with respect to changes in the sulfuric acid concentration as presented in the previous sections, as well as more limited with respect to the range of ferrous ion concentrations 0.5 to 5.0 observed in the previous section.

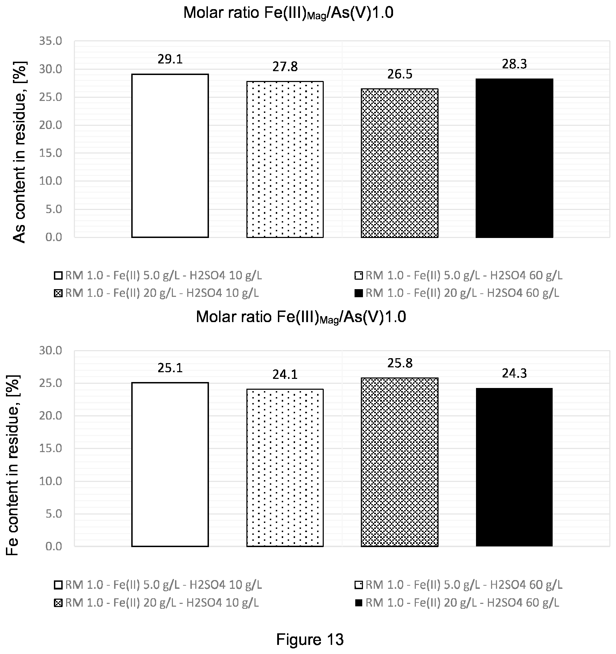

Figure 13, shows the effect of elevated sulfuric acid concentration and ferrous ion concentration on the As and Fe content of the arsenical residue ReAs - molar ratio Fe(III)_{Mag}/As(V) = 1.0 The results show that the As grade of the arsenical residue ReAs varies around 26-29%, while the Fe grade varies between 24-26%. Although an improvement is observed in terms of reduction of the Fe content in the arsenical residue, which is associated with a lower magnetite content in the sample, the results indicate that it is not possible to obtain a complete conversion of magnetite in the presence of high concentrations of ferrous ion, so there is a compromise in the improvement of the precipitation kinetics in the presence of ferrous ion and magnetite and the As content of the arsenical residue.

### Effect of lowering the Fe(III)_{Mag}/As(V) molar ratio from 1.0 to 0.5 at pH range 2 and 10 g/L sulfuric acid.

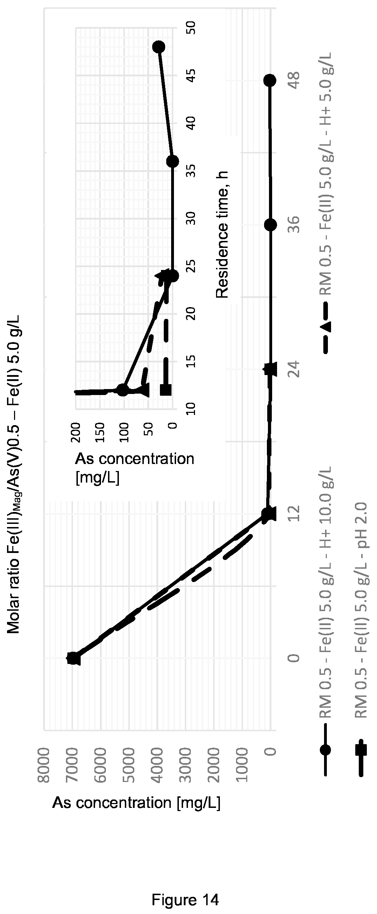

Figure 14 shows the effect of lowering the Fe(III)_{Mag}/As(V) molar ratio and ferrous ion concentration on the As concentration in the treated EPAS solution - 5.0 g/L sulfuric acid concentration. The results show that the most relevant effect is the reduction of the ferrous ion concentration to 2.5 g/L, which does not abate all the arsenic present in the solution. In kinetic terms, similar behaviors are observed, but the curves with ferrous ion concentration at 2.5 g/L show a stabilization of the total arsenic concentration between 300-700 mg/L.

### Effect of lowering Fe(III)_{Mag}/As(V) molar ratio from 1.0 to 0.5 and lowering ferrous ion concentration from 5 to 2.5 g/L

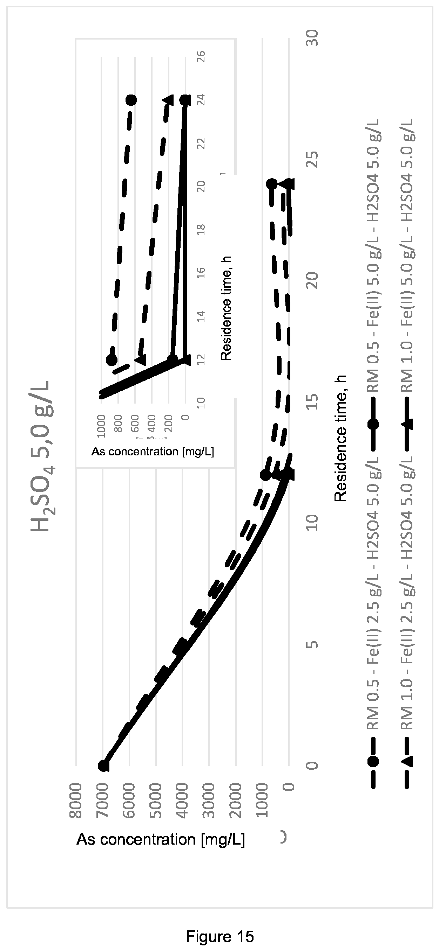

Figure 15 shows the comparison between Fe(II) concentration of 2.5 and 5.0 g/L and Fe(III)_{Mag}/As(V) molar ratio of 0.5 and 1.0, showing that the most significant arsenic abatement kinetic effect is associated with the ferrous ion concentration, with no major kinetic differences observed between the 0.5 and 1.0 molar ratios.

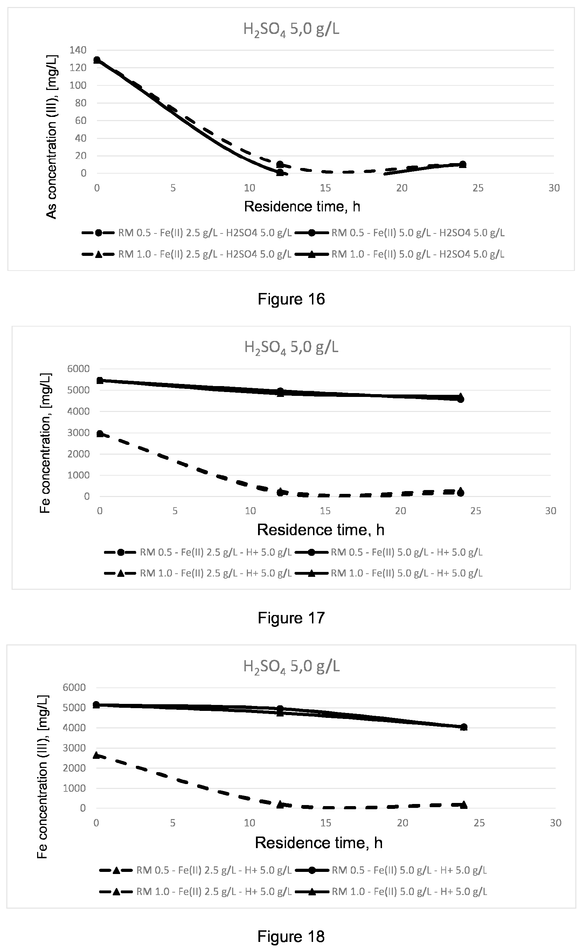

Figure 16 in particular shows a very relevant effect of this technology related to the drop in As(III) concentration from 130 mg/L to values below 20 mg/L, which shows that the system is able to oxidize a fraction of the As(III) present in solution.

Figures 17 and 18 show the effect of lowering the Fe(III)Mag/As(V) molar ratio and ferrous ion concentration on the concentration of Fe and Fe(II) in the treated EPAS solution - sulfuric acid concentration 5.0 g/L. The results show that when operating at an Fe(II) concentration of 2.5 g/L the system operates at a deficit of ferrous, being consumed within the first 12 h. This results in relatively slower kinetics, and eventually incomplete abatement due to the lack of iron in the system, as seen in Figure 15. All tests show a reduction in FeT concentration indicating that at least some of the ferrous is consumed to precipitate arsenic, so the system operates by ferrous ion oxidation reactions for the precipitation of arsenic in the form of scorodite.

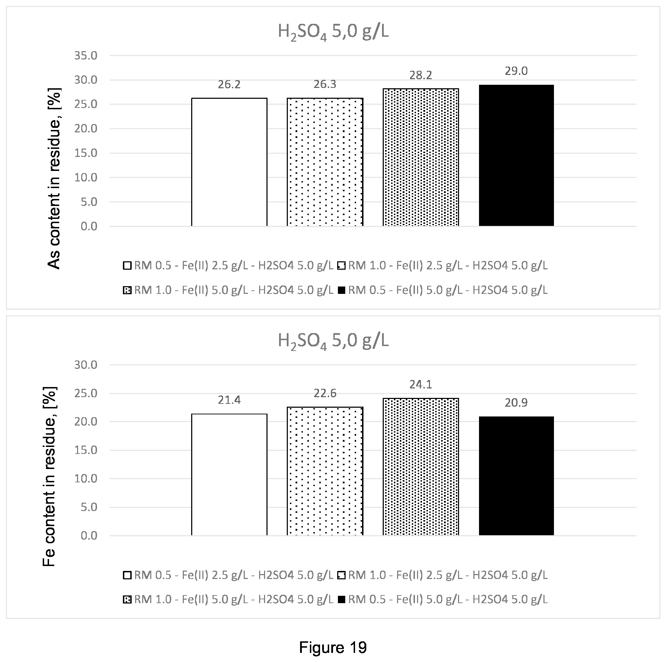

Figure 19 presents the effect of lower Fe(III)_{Mag}/As(V) molar ratio and ferrous ion concentration on the As and Fe content of the arsenic residue ReAs - 5.0 g/L sulfuric acid concentration. The results show that even at Fe(III)/As(V) molar ratios lower than 1.0 it is possible to generate precipitates having high As concentrations, and that compared to the Fe content the residues account for Fe/As molar ratios close to 1.0 which is consistent with the chemical formula of scorodite.

### Effect of lowering the Fe(III)_{Mag}/As(V) molar ratio from 0.5 to 0.3 at 0.5 g/L sulfuric acid and 0.5 g/L ferrous ion concentration

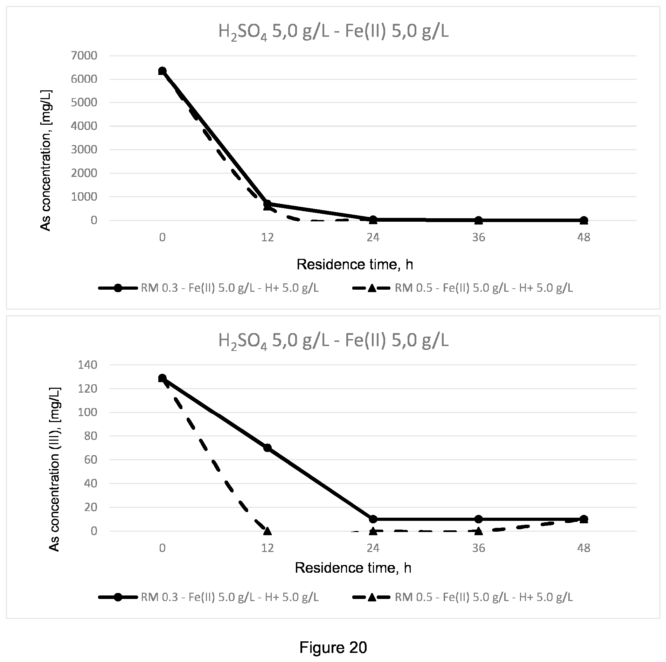

Figure 20 shows the effect of lowering the Fe(III)_{Mag}/As(V) molar ratio from 0.5 to 0.3. The results show that there is an effect on the As(III) oxidation yield, and this is so since the starting As(III) concentration was low at around 130 mg/L, with this slowdown not having a considerable effect on the arsenic precipitation yield.

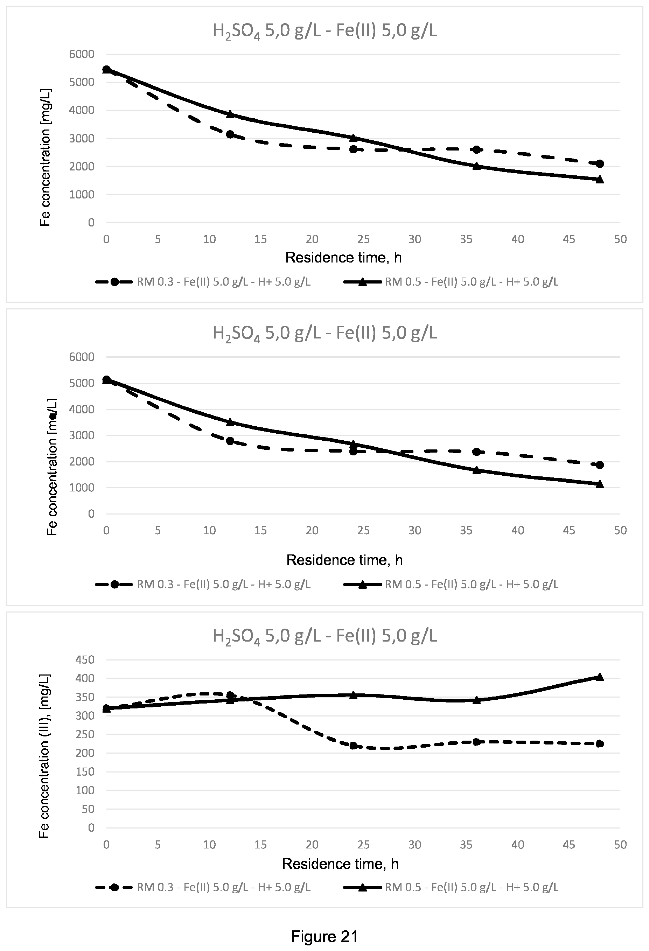

Figure 21 shows the concentration of Fe, Fe(II) and Fe(III) in the treated EPAS solution. For both Fe(III)_{Mag}/As(V) molar ratios, similar behaviors are observed in the reduction of Fe concentration in solution and the reduction in ferrous ion concentration. These results demonstrate that the precipitation process can be carried out at Fe(III)/As(V) molar ratios lower than 1, where the required Fe(III) is generated by the oxidation of ferrous ion and by the contribution of magnetite leaching. The Fe(III) concentration is observed to be always low, which supports the fact that the system operates under conditions where the concentration gradient between As(V) and Fe(III) is high enough to trigger nuclei generation for scorodite precipitation. Consequently, operating the scorodite precipitation in a series of reactors in series is not necessary in order to operate the precipitation at low doses of ferric ion, since there is a continuous supply of ferric to the system from the magnetite and from the oxidation of the ferrous ion, which is immediately consumed by the As(V) in solution to generate scorodite.

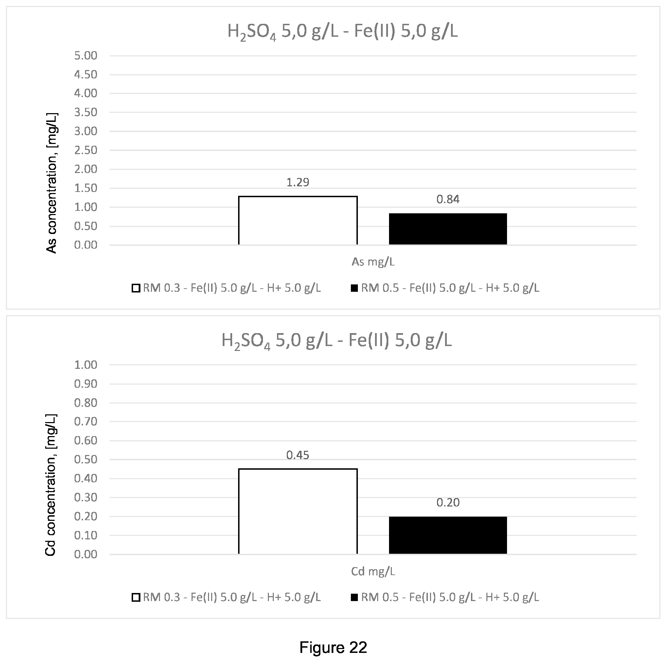

Figure 22 shows the concentration of As and Cd released in TCLP (Toxicity Characteristic leaching procedure) tests, obtaining values below the limits that determine the hazardousness of this type of waste. In particular, it is observed that the precipitated solids with Fe(III)_{Mag}/As(V) molar ratio 0.3 have higher As and Cd values released in TCLP tests than Fe(III)_{Mag}/As(V) molar ratio 0.5, which may be due to a lower degree of crystallinity at lower molar ratios because the reaction is more dependent on As(V) precipitation resulting from ferrous ion oxidation.

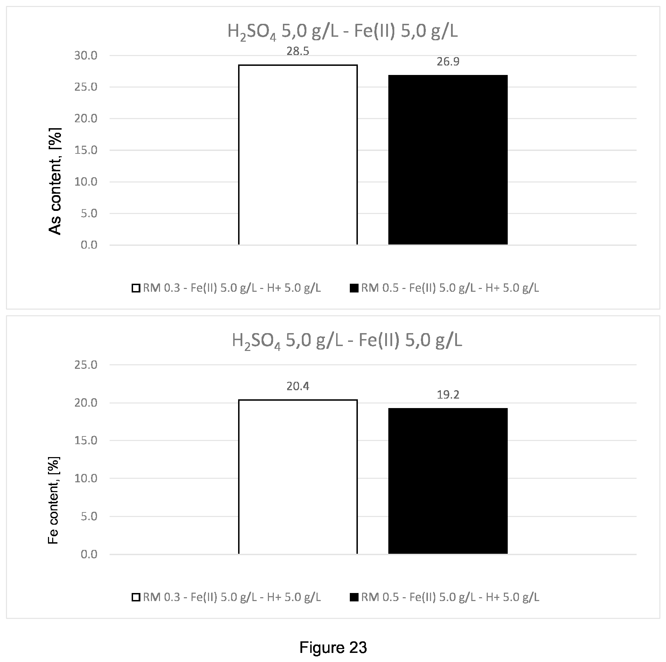

Figure 23 shows the As and Fe contents of arsenical residues generated from scorodite precipitation at Fe(III)_{Mag}/As(V) molar ratios 0.3 and 0.5. The results show Fe/As ratios close to 1, attributable to scorodite precipitation.

### Effect of the initial concentration of As(III)

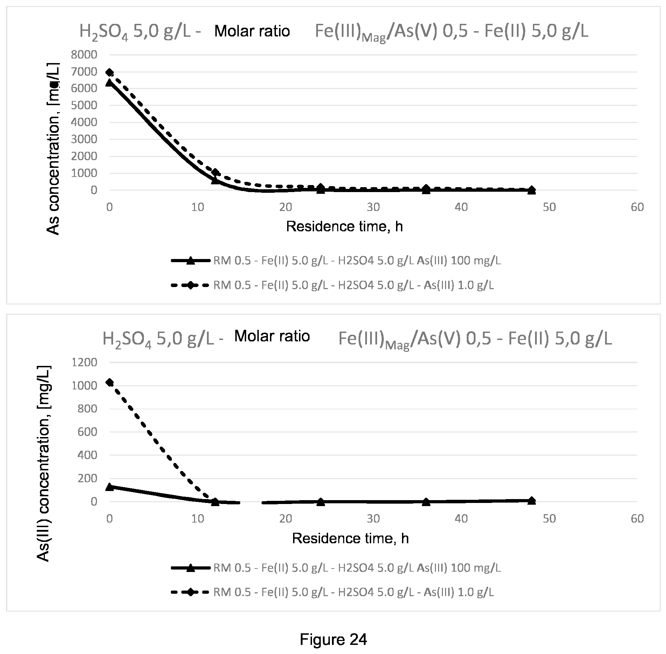

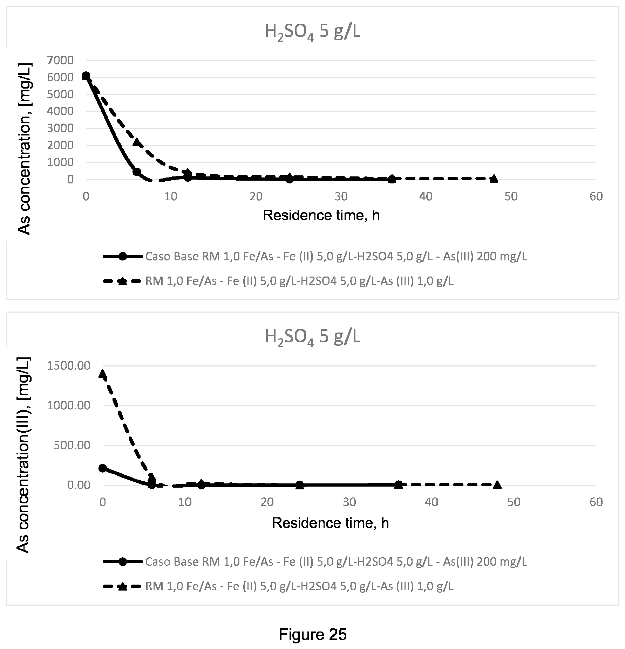

Figures 24 and 25 present the effect of increasing the initial As(III) concentration on the concentration of As and As(III) in the treated EPAS solution - sulfuric acid concentration 5.0 g/L - ferrous ion 5 g/L. The results show that with a Fe(III)_{Mag}/As(V) magnetite dosage of both 0.5 and 1.0 mol/mol it is possible to oxidize the As(III) present in solution. Additionally, the kinetics proceed slightly slower in the presence of As(III) due to the oxidation reaction necessary to be able to ablate As(V). This result is important, as it realizes that for the arsenic removal process in solutions containing high concentrations of As(III), the arsenic oxidation processes should not be so demanding in terms of the residual As(III) concentration, since the scorodite precipitation system in the presence of the magnetite and ferrous sulfate pair is able to oxidize fractions of As(III) present in solution, thus maximizing the arsenic abatement yields in the form of scorodite.

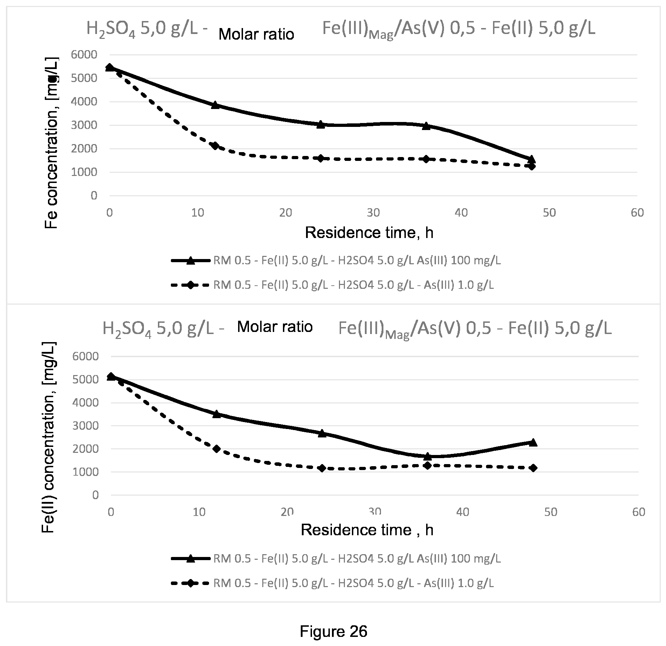

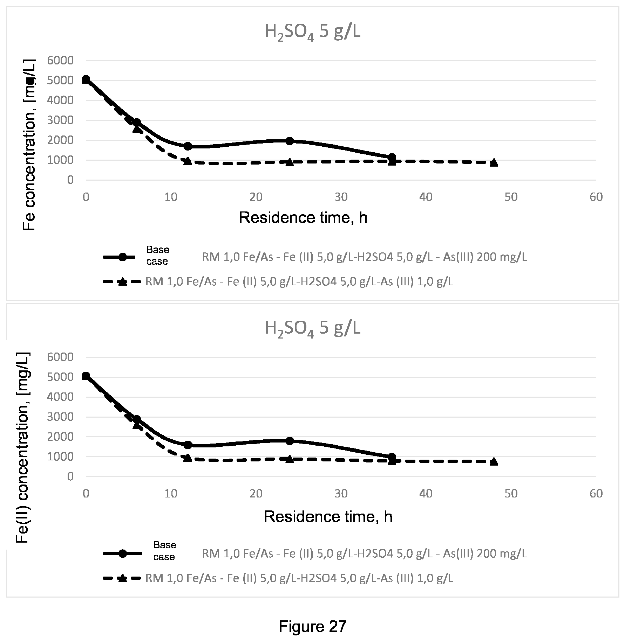

Figures 26 and 27 present the effect of increasing the initial As(III) concentration on the concentration of Fe and Fe(II) in the treated EPAS solution - sulfuric acid concentration 5.0 g/L - ferrous ion 5 g/L. The results show that in these tests there is a consumption of ferrous ion, which is slightly more pronounced in the presence of As(III) with respect to the solution with lower As(III) concentration, probably due to an activation of the oxidative cycle of the ferrous sulfate-magnetite pair. In any case, the process acts with slower arsenic abatement kinetics because it is required to complete the oxidative process of the arsenious ion prior to its precipitation as scorodite.

### Effect of ferrous ion concentration on arsenic precipitation

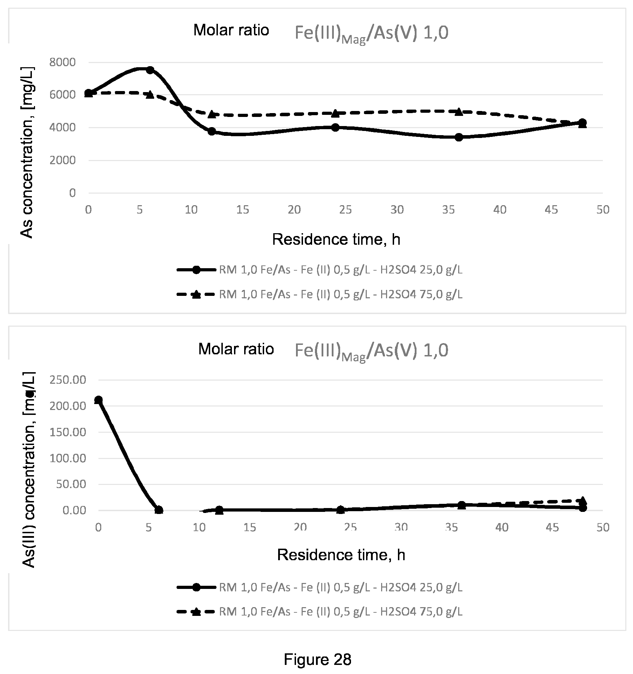

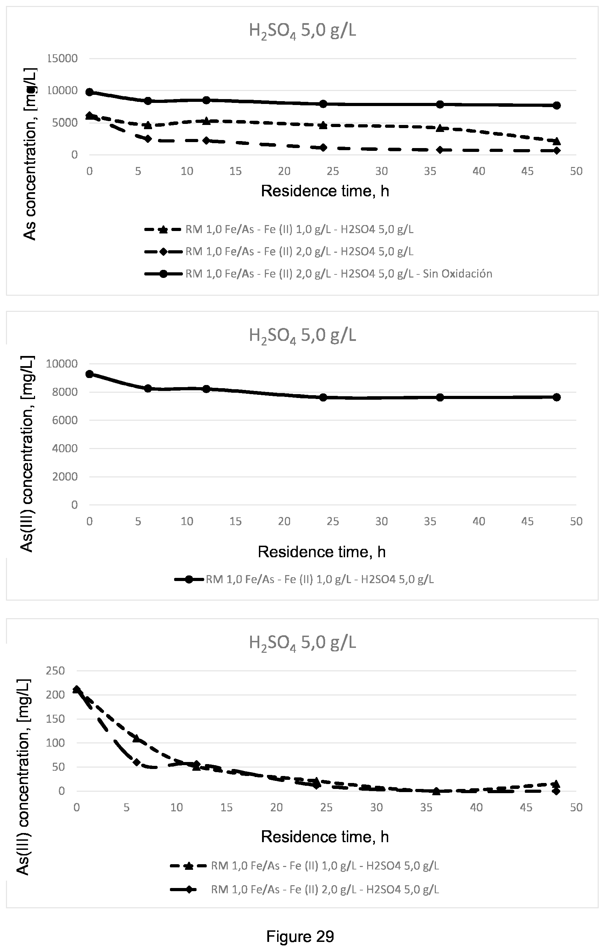

Figures 28 and 29 present the effect of lowering the initial Fe(II) concentration on the concentration of As and As(III) - sulfuric acid concentration 25-75 g/L - ferrous ion 0.5-2 g/L. The results show that at a concentration of 0.5 g/L Fe(II) it is not possible to drive As(V) precipitation, probably because the ferrous ion concentration is low enough to proceed with the catalytic reaction. As a consequence, the concentration difference of As(V) and Fe(III) is high enough to trigger the precipitation reaction. This is supported by increasing the Fe(II) concentration to 1.0 and 2.0, which as shown in Figure 29 improves the precipitation kinetics in 48 h, even though it does not reach the levels observed for Fe(II) concentrations above 3.0 g/L observed in the previous sections. The test without As(III) oxidation (i.e., As(III) concentration around 10 g/L) fails to precipitate arsenic with ferrous ion concentration of 2.0 g/L. These results show that oxidation of the arsenious ion is necessary for precipitation, since the ferrous ion - magnetite system is not sufficient to generate the oxidation of all the arsenious ion present in solution, but only a fraction of it. On the other hand, the critical concentration of ferrous ion to achieve arsenic abatement with concentrations in the treated solution below 100 mg/L is close to 3 g/L of ferrous ion.

### Effect of increasing the concentration of ferrous ion to 3-4 g/L

Tests were conducted to adjust the dose of magnetite and ferrous ion so that the total iron supplied to the system is as low as possible. The doses contributed in this test plan were Fe(III)_{Mag}/As(V) 0.5 mol/mol is equivalent to FeT_{Mag}/As(V) 0.75 and Fe(II)/As(V) molar dose 0.63-0.84 mol/mol, which totals FeT/As(V) molar ratios within the range of 1.38-1.59 mol/mol.

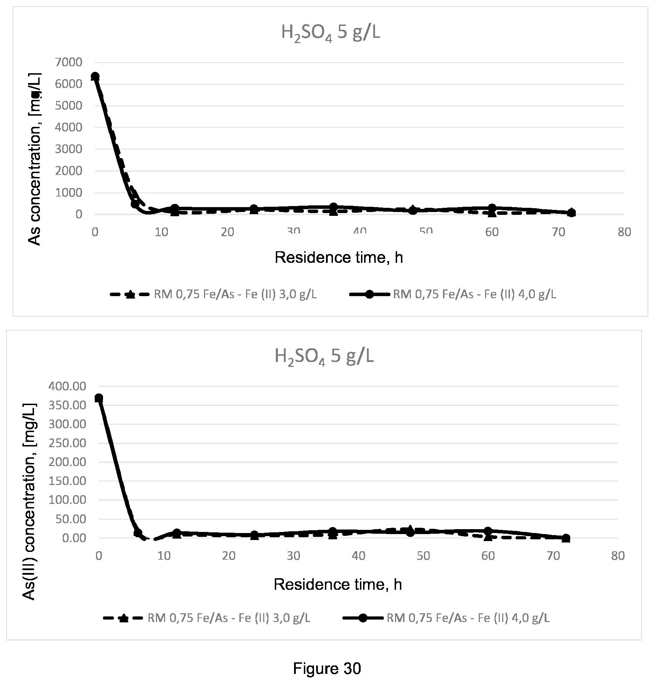

Figure 30 shows the effect of initial Fe(II) concentration in the range 3-4 g/L on As and As(III) concentration - sulfuric acid concentration 5.0 - Fe(III)_{Mag}/As(V) ratio 0.5 mol/mol. The results show that a higher ferrous ion concentration allows to improve the precipitation kinetics, as presented in the previous sections. However, the concentrations of total As at 48 h of precipitation are within the range of 100-200 mg/L, while those of As(III) are around 10-20 mg/L.

### Synergistic effect of magnetite and ferrous ion addition

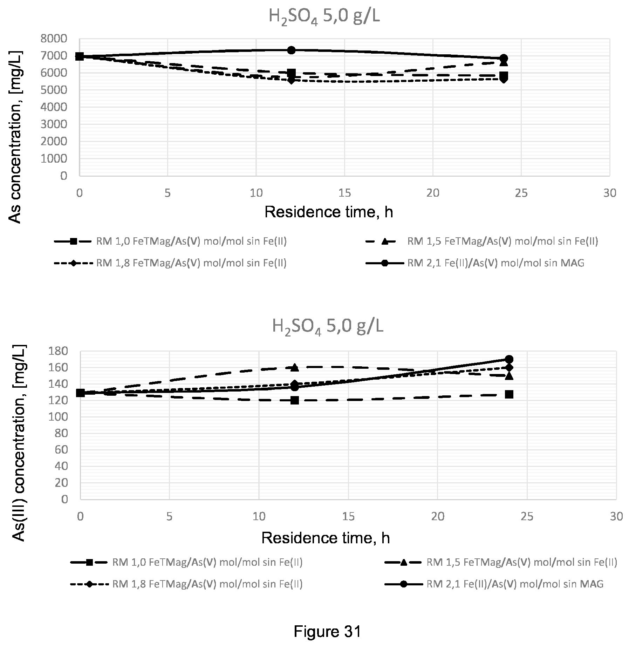

In order to isolate the effects of the addition of magnetite and ferrous ion on the precipitation of As(V) as scorodite, three experiments were carried out with only magnetite addition and one experiment with only ferrous ion addition. The results are presented in Figure 31, which show that in none of the conditions the arsenic present in the solution could be abated. In this sense, these results demonstrate the synergistic effect of the addition of magnetite and ferrous ion for the abatement of arsenic in the form of scorodite. The mechanisms by which arsenic is abated in the presence of both elements can be very complex, but they must necessarily be related to a Fenton-type effect between the ferrous ion and the magnetite present in the mixture, which must generate a flow of electrons capable of oxidizing the ferrous present in solution to trigger the precipitation reaction of As(V) in the form of scorodite.

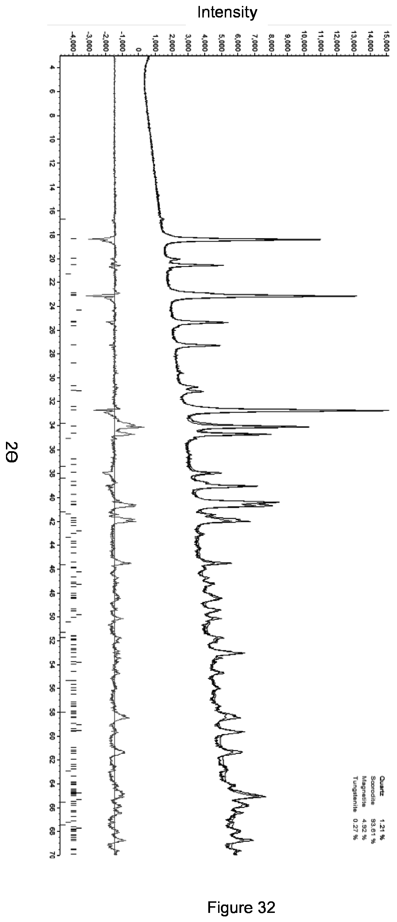

Figure 32 shows a diffractogram of arsenical residue ReAs generated in 24 h of precipitation with Fe(III)_{Mag}/As(V) molar ratio 1.0 and ferrous ion concentration 5 g/L and sulfuric acid concentration of 5 g/L, where it can be observed that the arsenical residue has a scorodite content higher than 95%wt..

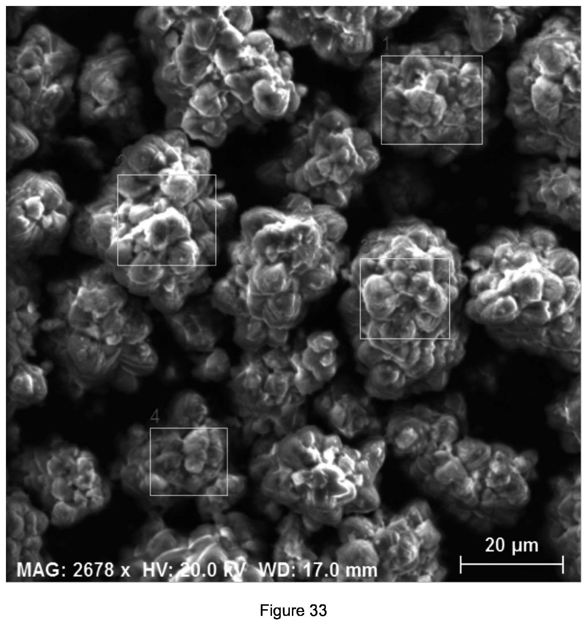

Figure 33 shows a scanning electron microscopy image of arsenical residue ReAs generated in 24 h of precipitation with Fe(III)_{Mag}/As(V) molar ratio 1.0 and ferrous ion concentration 5 g/L and sulfuric acid concentration of 5 g/L, where the typical morphology of scorodite crystals of spherical aggregate particles is observed.

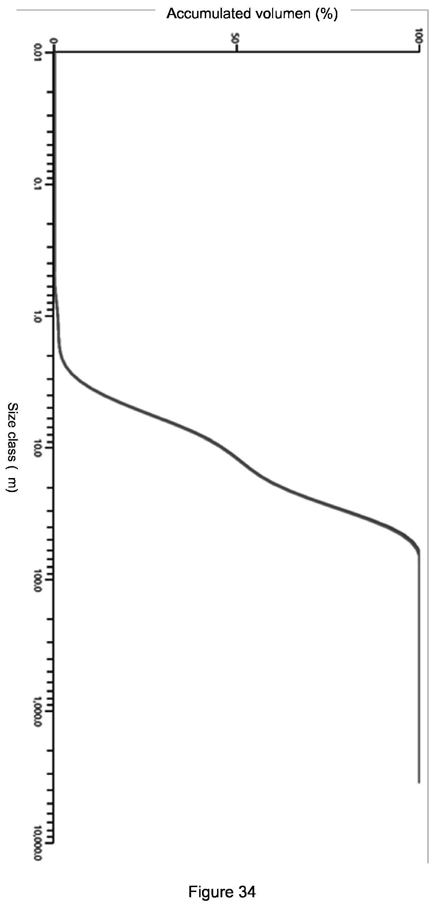

Figure 34 shows the particle size distribution of arsenical residues ReAs generated in 48 h of precipitation with Fe(III)_{Mag}/As(V) molar ratio 0.5 and ferrous ion concentration 4 g/L and sulfuric acid concentration of 5 g/L, where it is observed that 80% of the particles have a size smaller than 30 µm.

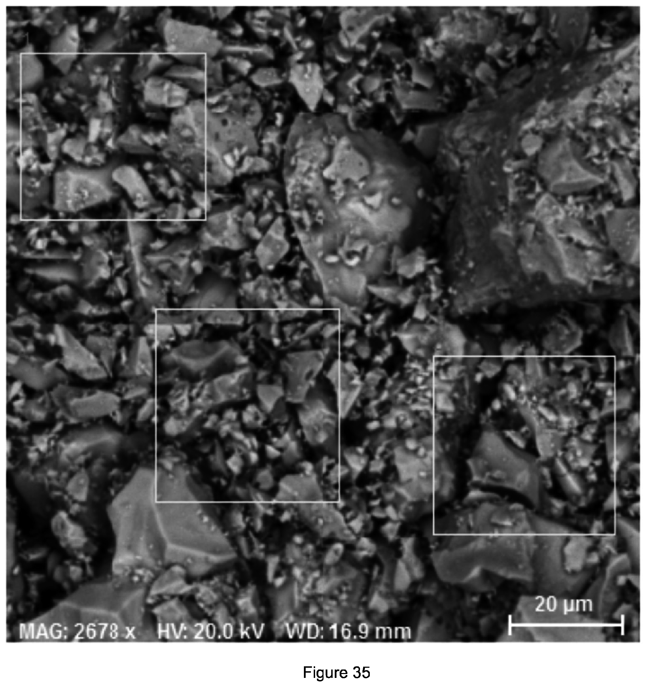

Figure 35 shows a scanning electron microscopy image of magnetite used in the scorodite precipitation tests.

In conclusion, based on the results obtained using the process of the present invention, it is possible to state that:
- It is possible to precipitate or generate arsenical residues using magnetite as a source of Fe3+ with EPAS (Sulfuric Acid Plant Effluent) solutions, generating abated solutions having As concentrations below 100 mg/L and arsenical residues with arsenic contents above 25%wt..
- For the precipitation of scorodite from EPAS it is necessary to provide at least 0.3 mol FeT/As(V) from magnetite and ferrous ion concentrations of 5 g/L. Additionally the process requires the use of seed which has been set at 15%wt. to accelerate the reaction kinetics.
- The ferrous ion and magnetite pair generates a synergistic effect on scorodite precipitation. According to the results obtained, it is concluded that both agents participate in the precipitation of As(V), which is mostly reported as scorodite according to XRD analysis (XRD: X-ray diffractometry). Consequently, there must be an oxide reduction phenomenon that allows the oxidation of the ferrous ion in solution to be precipitated together with As(V) as scorodite.
- The pairing of ferrous ion and magnetite allows the generation of oxidation of As(III) remaining in the EPAS solution. As(III) concentrations up to 1.4 g/L can be oxidized to As(III) concentrations below 50 mg/L using systems comprising ferrous ion and magnetite.
- The kinetics of scorodite precipitation depend on a variety of factors, most notably:
   ∘ Sulfuric acid concentration, the lower the concentration the better the abatement kinetics.
   ∘ Ferrous ion concentration, the limiting concentration of Fe²⁺ is set at 3 g/L to facilitate the kinetics of scorodite precipitation using magnetite.
   ∘ Fe(III)_{Mag}/As(V) ratio, higher magnetite dosages favor arsenic precipitation kinetics, however, leave unreacted magnetite in the arsenical residue. The Fe(III)_{Mag}/As(V) molar ratio 0.5 is the one that maximizes the conversion of magnetite to scorodite, provided that sufficient ferrous ion is added.
   ∘ Percentage of seed solids, higher percentage of solids favors precipitation kinetics. It has been established that a solids percentage of 15%wt. is sufficient to accelerate the precipitation kinetics of scorodite.
- Depending on the dosage of magnetite and ferrous sulfate, the precipitation of scorodite generates and/or consumes sulfuric acid. The systems that favor the conversion of magnetite are acid consumers, while those that react by converting the ferrous ion present in solution release acid. For the system evaluated with EPAS solutions the precipitation of scorodite generates acid at the rate of 5 g/L in solutions of 6.3 g/L AsT (0.6 mol of sulfuric acid per mol of As(V)).
- The arsenical residues generated with EPAS solutions are stable for the TCLP assay for both As and Cd concentrations, both being less than 5 and 1 mg/L, respectively.
- The arsenical residue generated under the proposed process is the residue that has the highest As grade and is environmentally stable of those evaluated by EcoMetales to date. The results were obtained with real sulfuric acid Plant effluent solutions.

## Claims

1. A process for obtaining scorodite without the use of neutralizers from solutions comprising arsenic and sulfuric acid, **CHARACTERIZED in that** it comprises the steps of:
i. subjecting a first arsenical solution comprising arsenic in mixtures of arsenite ion and arsenate ion and sulfuric acid, to an oxidation process in order to oxidize the arsenite ion into arsenate ion, to obtain a second arsenical solution;
ii. adding to the second arsenical solution a first solution containing ferrous ion, to generate a third arsenical solution;
iii. adding to the third arsenical solution a first portion of magnetite to adjust the molar ratio of ferric ion and arsenate ion, to generate a first arsenical slurry;
iv. adding to the first arsenical slurry a portion of a scorodite slurry, recirculated from stage (viii), as a nucleation base of scorodite particles, to obtain a first scorodite slurry in the range of 2 to 15%wt.;
v. heating the first scorodite slurry to a temperature between 80 and 90°C;
vi. keeping the first scorodite slurry at a temperature between 80 and 90°C for a time between 5 and 48 h with constant agitation to obtain a second scorodite slurry;
vii. sending the second scorodite slurry to a solid-liquid separation stage to obtain a third scorodite slurry and a treated solution;
viii. recirculating a first part of the third scorodite slurry to stage (iv); and
ix. filtering a second part of the third scorodite slurry to obtain a scorodite cake that is sent to final disposal.

2. The process according to claim 1, **CHARACTERIZED in that** the first arsenical solution has an arsenic concentration ranging from 1 to 15 g/L.

3. The process according to claim 1, **CHARACTERIZED in that** the first arsenical solution has a concentration of sulfuric acid ranging from 5 to 80 g/L.

4. The process according to claim 1, **CHARACTERIZED in that** the oxidation process of step (i) comprises the addition of one of between hydrogen peroxide or sodium chlorite, or a photooxidation process.

5. The process according to claim 1, **CHARACTERIZED in that** the first solution of stage (ii) comprises ferrous sulfate.

6. The process according to claim 1, **CHARACTERIZED in that** in step (ii) the concentration of ferrous ion is adjusted between 0.5 and 20 g/L.

7. The process according to claim 1, **CHARACTERIZED in that** in the portion of magnetite that is added in step (iii) 80% of the particles have a particle size of less than 75 microns.

8. The process according to claim 1, **CHARACTERIZED in that** the temperature of step (v) is 85°C.
